# EUROPEAN PATENT APPLICATION

(11) **EP 4 390 635 A1**
(43) Date of publication of application: **26.06.2024**
(21) Application number: 22307017.8
(22) Date of filing: 22.12.2022
(51) Int. Cl.: G06F 3/0346, G06F 1/16

(54) **PERIPHERAL COMPRISING MAGNETOMETERS**

(71) Applicant: Advanced Magnetic Interaction, AMI, 38170 Seyssinet-Pariset (FR)
(72) Inventor: HAUTSON, Tristan, 38170 Seyssinet-Pariset (FR); ROSSET, Clément, 38170 Seyssinet-Pariset (FR); VALLEJO, Jean-Luc, 38170 Seyssinet-Pariset (FR); PELLERANO, Vincent, 38170 Seyssinet-Pariset (FR); JOBERT, Timothée, 38170 Seyssinet-Pariset (FR)
(74) Representative: Peterreins Schley

(57) **Abstract**

A peripheral device (50) comprising a support (51) defining a peripheral coordinate system of the peripheral device (50), wherein the peripheral device (50) has a longitudinal, transverse and vertical extent, a plurality of magnetometers (54) disposed on the support (51); a controller (52) communicably coupled to the plurality of magnetometers (54, 80), and a communication interface (53) communicably coupled to the controller (52).

## Description

### TECHNICAL FIELD

The present disclosure relates to an electronic device configured to a peripheral device, a host device, a system, a computer-implemented method for determining a location of a user-borne device, and an associated computer program element and computer readable medium.

### BACKGROUND

In the technical field of location determination and/or tracking of a device held or worn by user (i.e., a user-borne device), the provision of a plurality of magnetometers allows measurement of a magnetic field associated with a magnetic object arranged in or coupled to the user-borne device. The user-borne devices using this technology may be electronically and/or electrically passive. More specifically, electrically passive means that the user-borne device does not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device. The magnetometer measurements enable determination and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

A user-operation of the user-borne device within a sensing volume created by the plurality of magnetometers may be represented on an output device (e.g., a screen) to a user. More specifically, a movement of the user-borne device within the sensing volume may be reproduced as a movement of a virtual object on the output device. In current applications, a visual reproduction on an output device of a location of a user-borne device within the sensing volume may be inaccurate and not reliable with respect to certain arrangements of the plurality of magnetometers and the output device. Accordingly, electronic devices comprising magnetometers can be further improved.

### SUMMARY

According to a first aspect, there is provided a peripheral device comprising:
- a support defining a peripheral coordinate system of the peripheral device. The peripheral device has a longitudinal, transverse and vertical extent. The peripheral device comprises a plurality of magnetometers disposed on the support, a controller communicably coupled to the plurality of magnetometers and a communication interface communicably coupled to the controller.

According to a second aspect, there is provided a host device comprising a stowage portion configured to store the peripheral device according to the first aspect or its embodiments.

According to a third aspect, there is provided a system comprising a host device according to the second aspect, and a peripheral device according to the first aspect, wherein the peripheral device is communicably coupled to the host device and a user-borne device comprising at least one magnetic object and/or magnetic field generator. The peripheral device is configured to obtain magnetic field measurements associated with the user-borne device, to determine a location of the user-borne device relative to the peripheral coordinate system of the peripheral device, and to communicate the location of the user-borne device from the peripheral device to the host device. The aspects, features and embodiments described herein with respect to the user-borne device may also be applicable to more than one user-borne devices. In this case, the user-borne device may be at least one user-borne device, and the one or more aspects, features and embodiments described herein may be applicable to the at least one user-borne device.

According to a fourth aspect, there is provided a computer-implemented method for determining a location of a user-borne device, comprising:
- obtaining, at a peripheral device according to the first aspect, or its embodiments, magnetic field measurements associated with at least one magnetic object of the user-borne device and measured with a plurality of magnetometers comprised within the peripheral device;
- determining, at either the host device, or the peripheral device, the location of the user-borne device based on the magnetic field measurements;
- communicating the location of the user-borne device to a device driver instantiated in a user environment of the host device.

According to a fifth aspect, there is provided a computer program element comprising machine readable instructions which, when executed, cause a computer to carry out the computer implemented method according to the fourth aspect.

According to a sixth aspect, there is provided a computer readable medium comprising the computer program element according to the sixth aspect.

An effect is that a specific magnetometer arrangement in a peripheral is provided enabling improved tracking of one or more magnets in a user-borne device.

Typical electronic devices, such as laptop computers, have a large number of ferromagnetic, ferrimagnetic elements, magnet or coil that affect the performance of magnetometer arrays when detecting the location of a magnetic object in a user-borne device. Furthermore, electronic devices such as laptops have demanding positioning constraints restricting where magnetometers can be placed.

The present specification discusses a solution in which the sensing volume is created so as to cover sensing regions of a peripheral to extend the sensing surface, of a magnetically based location sensing system. In specific arrangements, the sensing volume is created so as to cover the region surrounding a peripheral. The peripheral may be positioned next to a laptop, or any other host device such as, e.g., a tablet, a smartphone, or a desktop, thus enabling the use of a magnetometer based interaction modality with the laptop. In other examples, a peripheral provided at the either side of the laptop enable the sensing volume, and/or sensing surface to be extended along the sides of the laptop computer. Furthermore, the peripheral may be placed at a significant distance, such as one or 10 metres from the laptop or other host device, and still allow user interaction. The peripheral may be retrofitted, or provided with, a large television or an interactive classroom whiteboard to facilitate improved interaction during public presentations.

The application of such techniques improves the accuracy of detection in a sensing volume or sensing surface above an electronic device, such as a laptop, which is the area where accessories such as computer styli or other pointers are typically used. In general, the possible sensing volume or sensing area is bigger, owing to the improved signal-to-noise ratio of the magnetometer sensing system. Sensors located at least in a peripheral improve the signal-to-noise ratio when sensing in a sensing volume located above the user hand rest or keyboard area of the laptop, for example.

The peripheral described in this specification can be communicably coupled to any electronic device, such as a laptop or keyboard (or any other device having connection port supporting power and data. The peripheral may be a remote accessory. The remote accessory may be wirelessly connected to any electronics device by BLE (Bluetooth^{®} Low Energy) and/or WiFi. The peripheral may comprise an internal power source provided electrical power.

The peripheral can be in a bar format as a single unit. Alternatively, the peripheral can be configurable to change shape to better accommodate the user interaction surface. The change of shape may be in two dimensions or three dimensions (using an articulated ball joint, for example).

The sensing volume is created around the peripheral. This arrangement enables a relatively large tracking volume, if the peripheral is long.

The peripheral can also be modular, and pluggable into at least one further peripheral to extend the tracking volume.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- Fig. 1: schematically illustrates a peripheral device according to the first aspect.
- Fig. 2: schematically illustrates a system comprising a peripheral device according to the second aspect.
- Figs. 3A and 3B: schematically illustrate a plan view and a side projection of the system of the second aspect.
- Fig. 4: schematically illustrate a system for controlling a representation of a user borne device.
- Fig. 5: schematically illustrates the resolution of the position of a of a magnetic object relative to a magnetometer plane.
- Fig. 6: schematically illustrates variants of magnetometer arrays.
- Figs. 7A and 7B: schematically illustrate a plan view of an articulated peripheral in closed and open positions.
- Figs. 8A and 8B: schematically illustrate a slidable peripheral in stored and deployed positions.
- Fig. 9: schematically illustrates a system of two pluggable peripheral devices
- Figs. 10A and 10B: schematically illustrate a peripheral comprised in a fabric substrate in a stored and deployed state.
- Fig. 11: schematically illustrates a deployed peripheral comprised in a fabric substrate.
- Fig. 12: schematically illustrates a method according to the third aspect.

### DETAILED DESCRIPTION

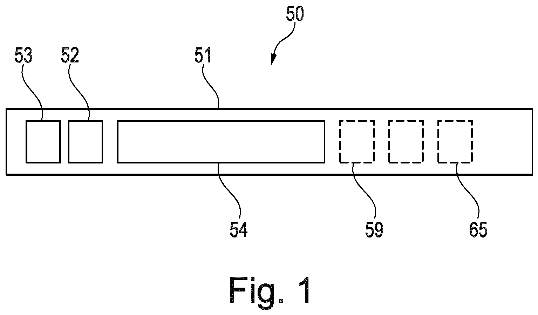

Fig. 1 schematically illustrates a peripheral device 50 according to the first aspect. According to a first aspect, there is provided a peripheral device 50 comprising:
- a support 51 defining a peripheral coordinate system of the peripheral device 50. The peripheral device 50 has a longitudinal, transverse and vertical extent. The peripheral device 50 comprises a plurality of magnetometers 54 disposed on the support 51, a controller 52 communicably coupled to the plurality of magnetometers 54, 80, and a communication interface 53 communicably coupled to the controller 52. According to an embodiment, the support 51 defines a magnetometer plane 310 in a longitudinal X and transverse Y direction, or a longitudinal X and vertical Z extent of the peripheral coordinate system.

According to an embodiment, the magnetometer plane 310 intersects a majority, or each, magnetometer 80 of the plurality of magnetometers 54.

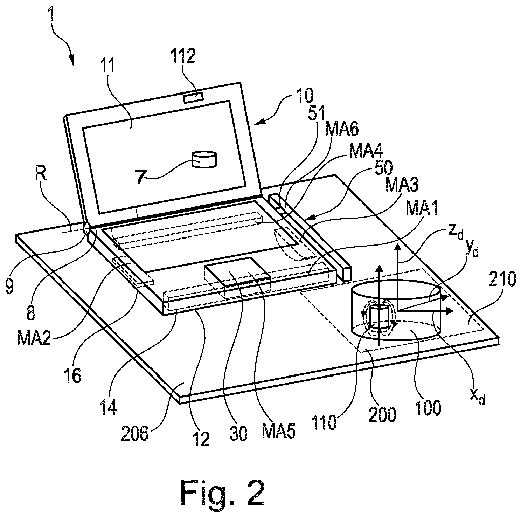

Fig. 2 schematically illustrates a system 1 comprising a host device 10 and the peripheral device 50 according to the second aspect.

The host device 10 illustrated in Fig. 1 is a laptop computer comprised in a system 1 including a user-borne device 100. The user-borne device may, for example, be a computer mouse, a dial, a ring, a toy, a keyboard, a joystick or a computer stylus. The user-borne device 100 comprises at least one magnetic object 110. The user-borne device 100 is translatable and/ or rotatable, for example, laterally on an interaction surface 210 provided by an interaction support 200. The aspects and embodiments described herein with respect to the user-borne device 100 may also be applicable to more than one user-borne devices. In this case, the user-borne device 100 may be at least one user-borne device, and the one or more aspects, features and embodiments described herein may be applicable to the at least one user-borne device 100.

According to some embodiments, the host device 10 comprises a plurality of magnetometers MA1-MA5. Translations and/or a 3D location (including position and/or orientation in a sensing volume, e.g., a rotation) of the user-borne device 100 (and hence the magnetic moment of the at least one magnet comprised within the user-borne device 100) are detected by one or more pluralities of magnetometers MA1-MA5 comprised within the enclosure 12 of the host device 10.

The one or more pluralities of magnetometers MA1-MA5 output signals that are subjected to signal processing, enabling the electronic device 10 to resolve the position location of the user-borne device 100 relative to the one or more pluralities of magnetometers MA1-MA5. Typically, the signal processing is performed by an embedded controller communicably coupled to the one or more pluralities of magnetometers MA1-MA5. The output of the signal processing, comprises, for example, a 2D location of the user-borne device 100 in the XY plane of the interaction surface 210, or a 3D location in a sensing volume defined around the host device 10. The output of the signal processing is provided to a device driver executed in a software environment of the host device 10. The device driver executed by the operating system of the host device 10 may be accessed by one or more applications hosted by the software environment of the host device 10. In this way, applications hosted by the software environment of the host device 10 obtain a proxy for the location (position or orientation) of the user-borne device 100 in 2D or 3D coordinates. Applications hosted by the software environment of the host device 10 can, therefore, use the location of the user-borne device 100 for a wide range of user input tasks. In the example of Fig. 2, the location of the user-borne device 100 is represented by a screen cursor 7 on the display 11 of the host device 10.

The host device 10 typically comprises a portion enclosed by a tablet-shaped cuboid envelope that rests on the interaction service 210. The host device 10 is illustrated is a laptop computer, which is also comprises a display 11 pivotable using a hinge 9 around the hinge axis R. The enclosure 12 thus comprises a first surface 14 that typically faces towards a user, in use. The enclosure also comprises a second surface 16 on the left hand side of the user. The enclosure 12 also comprises a third surface 18 (not visible in the projection of Fig.1) on the right hand side of the user. The enclosure 12 also comprises a fourth surface 20 on the rear surface of the enclosure 12 which faces away from a user, in use. The first to fourth surfaces are covered by a surface comprising, for example, a touchpad 30. In use, the surface comprising the touchpad 30 functions to support the wrist of the user, for example.

A skilled person appreciates that the foregoing description of a laptop enclosure is one example, and the host device 10 can also be embodied in a tablet, a smart phone, a keyboard, a television, and/or a host device 10 having an arbitrary shape, such as a circular shape, square shape, triangular, pentagonal, or hexagonal shape, or any other shape.

In examples, the hinged display 11 portion of the host device 10 comprises a display surface magnet 112. In use, the location of the display surface magnet relative to the enclosure 12 can be resolved by one or more of the pluralities of magnetometers M1-M5 comprised in the enclosure 12.

In examples, the hinged display 11 portion of electronic device 10 comprises at least one plurality of magnetometers (not illustrated), to provide greater fidelity to the detection of the location of the user-borne device 100.

In embodiments, the host device 10 includes a second plurality of magnetometers MA2 on the left-hand side of the enclosure 12. In embodiments, the electronic device 10 includes a third plurality of magnetometers MA3 on the right-hand side of the enclosure 12. The additional pluralities of magnetometers MA2 and MA3 extend along the enclosure 12 in the Y dimension, thus providing improved fidelity of the motion of the user-born device 100 towards the right and/or left-hand sides of the enclosure 12 on the interaction surface 210, or sensing volume proximate to the right or left sides of the enclosure 12. In embodiments, a fourth plurality of magnetometers MA4 provided along the rear of the enclosure 12 improve the fidelity of position detection of the user-borne device 100 proximate to the rare of the enclosure 12. For example, an electronic device 10 having the "2 in 1" format or a generic tablet PC may benefit from a fourth plurality of magnetometers MA4 enabling user interaction at the rear of the electronic device 10. A fifth plurality of magnetometers MA5 spatially correlated with the touchpad 30 may improve the resolution in a sensing volume immediately above or around the touchpad 30. A sixth plurality of magnetometers (not illustrated) installed in the hinged portion of the enclosure 12 comprising the display 11 can further improve the fidelity of detection in the sensing volume in front of the display 11.

According to an embodiment, the host device 10 is one of a laptop computer, a desktop computer, a tablet computer, a smartphone, a keyboard , a smartwatch, a television, an interactive whiteboard, a virtual reality headset, a wireless access point, and/or a display projector.

In examples, as a laptop computer, the enclosure 12 of the host device 10 comprises one or more other electronic modules. None of the following components are illustrated in Fig. 1 for the purposes of clarity. For example, the enclosure 12 illustrated in Fig. 1 can comprise a base cover configured to contact the interaction support 200, a battery configured to power other electronic circuit components of the electronic device. The enclosure may comprise a solid state drive or disc-based hard drive, a system board, one or more loudspeaker enclosures, a display assembly, a wireless modem and an associated antenna, a USB interface board, a heat sink and system fan, a palm-rest assembly, an I/O daughter board, and a heat sink shield. Furthermore, the enclosure comprises mechanical mounting elements such as pillars capable of holding the listed internal components of the host device 10 in place. Typically, an electronic device 10 has limited space for the addition of extra components. According to an embodiment, the first surface of the enclosure 12 is closest to, and faces, a user of the host device 10, in operation.

According to an embodiment, the host device 10 does not comprise any pluralities of magnetometers.

Fig. 2 illustrates a peripheral device 50 according to first aspect. In embodiments, the peripheral device 50 is mechanically coupled to the host device 10. For example, the support 51 of the peripheral device electronics connector, such as a USB connector. By engaging the plug of the peripheral device 50 with a USB socket present, for example, on the right hand side surface of the host device 10, a secure, and reversible, mechanical connection between the peripheral device 50 and the host device 10 is formed. In embodiments, the peripheral device 50 does not contact the surface 200. In embodiments, a functional coupling is an electronic link between the host device 10 and the peripheral 50. The functional coupling enables the peripheral 50 to receive electrical power from the power supply of the host device 10. The functional coupling enables the peripheral 50 to transfer data containing location information concerning at least one user device 100 to the host device 10.

In embodiments, the peripheral 50 may be or may comprise a remote accessory. The remote accessory may be wirelessly connected to the host device 10 (or any other electronic device 10) by BLE (Bluetooth^{®} Low Energy) and/or WiFi. In embodiments, the peripheral 50 may be spaced apart from the host device 10 (e.g., not mechanically coupled). The peripheral 50 may comprise an internal power source (and/or a power source coupled to the peripheral 50) providing electrical power.

In embodiments, the peripheral device 50 is supported by the surface 200. In embodiments, the peripheral device 50 may be inserted into a mechanical and functional coupling present on the first surface 14, or the second surface 16, or the third surface 18, or the fourth surface 20 of the enclosure 12. In embodiments, the peripheral 50 engages the host device 10 via a functional coupling provided by a cable, such as a USB cable. In this case, the peripheral 50 can be positioned in a wide range of locations on the surface 200. In embodiments, the peripheral 50 comprises an independent power supply and a wireless communication interface. In this case, the peripheral 50 can be positioned at arbitrary locations on the surface 200.

The plurality of magnetometers 54 comprised within the peripheral 50 enables a sensing area or sensing volume around the peripheral 50 to detect the location (position and/or orientation) of a user device 100 and to transmit the detected location to a device driver hosted by the operating system of the host device 10.

According to an embodiment, the location data obtained after processing signals from the plurality of magnetometers 54 comprised within the peripheral 50 can be used to augment the signals obtained from a plurality of magnetometers MA1-MA5 comprised within the host device 10. In an embodiment, the location data obtained after processing signals from the plurality of magnetometers 54 comprised within the peripheral 50 is used to extend the physical dimensions of a sensing volume or sensing surface around the host device 10. In an embodiment, the location data obtained after processing signals from the plurality of magnetometers 54 comprised within the peripheral 50 is used to improve the sensitivity of the plurality of magnetometers MA1-MA5 comprised in the host device.

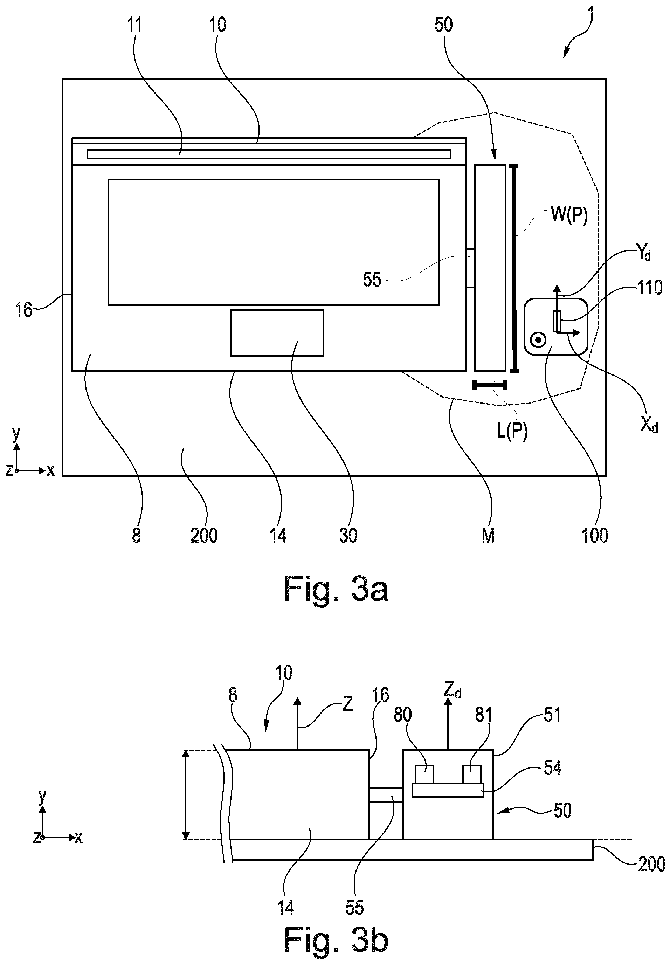

Figs. 3A and 3B schematically illustrate a plan view and a side projection of the system of the second aspect. The internal arrangement and external shape of the peripheral 50 illustrated in Figs. 3A and 3B are exemplary, and a skilled person will appreciate that many internal arrangements and external shapes can be used. In this embodiment, the peripheral 50 is functionally connected to the host device 10 by the connector (for example a USB connector) 55.

An extended sensing volume M is illustrated surrounding the peripheral 50. The peripheral 50 has a length L(P) and a width W(P). According to an example, the length L(P) of the peripheral is greater than 5 mm, 10 mm, 15 mm, 20 mm, 25 mm, 30 mm, 35 mm, 40 mm, 45 mm, 50 mm, 100 mm, 500 mm, or 1000 mm.

According to an example, the width W(P) of the peripheral is greater than 5 mm, 10 mm, 15 mm, 20 mm, 25 mm, 30 mm, 35 mm, 40 mm, 45 mm, 50 mm, 100 mm, 250 mm, 290 mm, 350 mm, 500 mm, 750 mm, 1000 mm, 2000 mm, 3000 mm, 4000 mm, or 5000 mm.

According to an embodiment, the first subset of the plurality of magnetometers 54 is disposed on a first face of the support 51, and the second subset of the plurality of magnetometers 54 is disposed on a second face of the support 51. In embodiments, the support 51 may comprise, or may be, at least one printed circuit board 69, and the plurality of magnetometers 54 may be mounted on the at least one printed circuit board 69. In embodiments, the support 51 may comprise a first printed circuit board and at least one second printed circuit board. The first subset of the plurality of magnetometers 54 may be disposed on the first printed circuit board. The second subset may be disposed on the at least one second printed circuit board.

According to an embodiment, the transverse extent of the support 51 is less than 30mm, more specifically less than 20 mm, and most specifically less than 10mm.

According to an embodiment, the longitudinal extent of the support 51 is less than 1000mm, 500mm, 400mm, 300mm, more specifically less than 250mm, 200mm, 175mm, 150mm, 125mm, 100mm, 75mm, or 50mm. According to an embodiment, the longitudinal extent of the support 51 is greater than 255mm, or greater than 100mm.

According to an embodiment, the longitudinal extent of the peripheral device 50 is at least two times greater than the transverse extent of the peripheral device 50.

According to an embodiment, the longitudinal extent of the peripheral device 50 is at least two times greater than the vertical extent of the peripheral device 50.

According to an embodiment, the magnetometers of the plurality of magnetometers 54 are mounted in the magnetometer plane 310. The angle enclosed by the magnetometer plane and the bottom surface of the enclosure of the peripheral 50 is at least 5, 7.5, 10, 12.5, 15, 17.5, 20, 22.5, 25, 27.5, 30, 32.5, 35, 37.5, 40, 42.5, 45, 47.5, 50, 52.5, 55, 57.5, 60, 62.5, 65, 67.5, 70, 72.5, 75, 77.5, 80, 82.5, 85, 87.5, or 90 degrees.

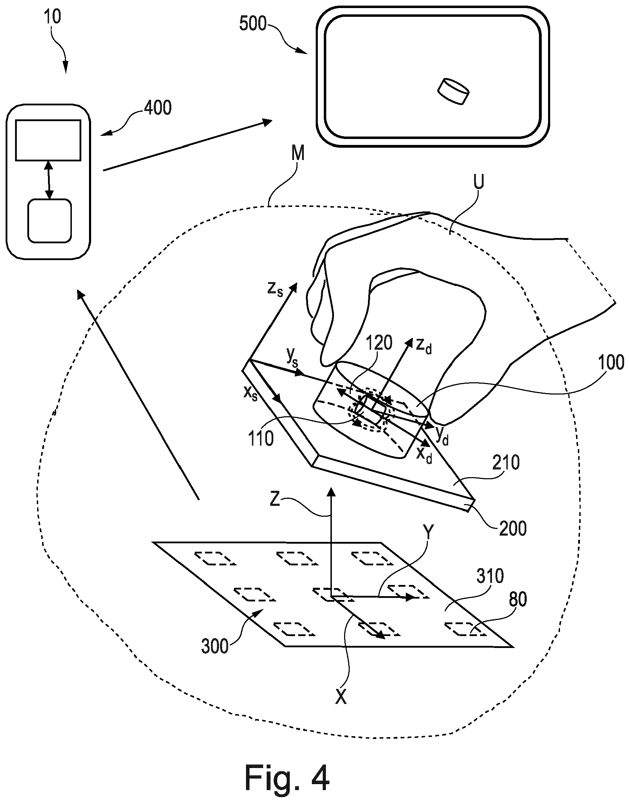

Fig. 4 schematically illustrate a system for controlling a representation of a user borne device.

Referring to Fig. 4, a user-borne device coordinate system comprises a first device axis xd, a second device axis yd orthogonal to the first device axis xd, and a vertical device axis zd orthogonal to xd and yd. In the examples shown, the user-borne device 100 may comprise a contact surface contacting an interaction surface 210. In other examples, the user-borne device may comprise a contact point (e.g., a stylus or other writing device comprising a writing tip which contacts an interaction surface 210 during a writing operation). The user-borne device 100 may be operated within a sensing volume M but not on the interaction surface 210. In this case, the user-borne device 100 may be used, e.g., as a pointer, which may not be operated directly on the interaction surface 210 (i.e., not in contact with and/or distanced to the interaction surface 210). In some embodiments, the device coordinate system may be defined within a geometric center of the user-borne device 100.

Referring to Fig. 4, an arrangement of the plurality of magnetometers with respect to an interaction surface 210 defined on an interaction support 200 is shown. In the embodiment shown in Fig. 4, the plurality of magnetometers 300 may be arranged in an array of rows and columns. However, it is also possible that the plurality of magnetometers may be arranged in a disordered, or randomized, manner within a plurality of magnetometers. A calibration procedure may be used to determine the exact locations, measurement axes, sensitivity and offset of each magnetometer within the magnetometer body relative to the reference coordinate system XYZ. When the plurality of magnetometers 300 is rigidly installed in an enclosure 12 of an electronic device 10, the reference coordinate system of the plurality of magnetometers 300 is related to the reference coordinate system of the electronic device 10 by a rigid transformation. The plurality of magnetometers 300 are shown in Fig. 4 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

The plurality of magnetometers 300 may be electrically (e.g., via wires or a data bus) or wirelessly connected to the processing unit 400, the external processing unit and/or to the electronics device. In embodiments, the plurality of magnetometers 300 may be integrated in a wall, a furniture, a notebook, an electronics device, a screen, a keyboard and/or a mouse pad. In case the plurality of magnetometers 300 is arranged in a wall, the interaction surface 210 may be a screen or display placed in front of the plurality of magnetometers 300. In embodiments, the interaction surface 210 may be defined on the one or more output devices 500.

In embodiments, the electronic device 10 may comprise a processing unit 400 or may be connectable to an external processing unit. The processing unit 400 may be configured to execute a computer-implemented method capable of resolving the location (position and/or orientation) of the user-borne device 10 relative to the coordinate system XYZ. In embodiments, the processing unit 400 may be integrated in the electronics device. In embodiments, the output device 500 may be integrated in the electronics device. In embodiments, the electronics device 10 may be a tablet, a cell phone, a laptop, a computer, a virtual reality (VR) set or a television.

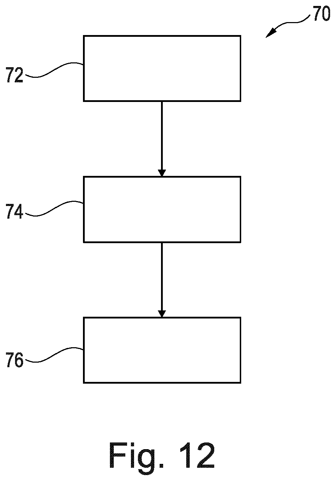

One of more of the pluralities of magnetometers MA1-MA5 of the electronic device 10 may be configured to enable the resolution of the 2D or 3D location, of a user-borne device 100 using signal processing. The spatial region within which the resolution can be performed with an acceptable signal to noise ratio is referred to as a sensing volume M1-M3 around the electronic device (as indicated, e.g., in Fig. 12). In an example, the sensing volume is defined by contours giving a common signal to noise ratio for location (position and/or orientation) detection. The plurality of magnetometers MA1-MA5 may be associated with a magnetometer plane 310. More specifically, the magnetometer plane 310 may be defined by a plane that may extend through a majority of the plurality of magnetometers 300. In some embodiments, the user-borne device 100 may be operable on an interaction surface 210, more specifically wherein the interaction surface 210 may be defined within, or as a boundary or, the sensing volume M.

When more than one plurality of magnetometers is present, a magnetometer plane is definable for each of the more than one plurality of magnetometers.

According to an embodiment, a peripheral device 50 is provided. The peripheral device 50 comprises a further plurality of magnetometers. The peripheral device 50 can be communicably coupled to the host device 10. As will be explained, the peripheral device 50 provides a sensing surface or volume that can be moved to an arbitrary volume around the host device 10 based on the placement of the peripheral device 50.

The term "at least one magnetic object" may refer to an object which may comprise components made of magnetic material, i.e., a material that has magnetic properties measurable by the plurality of magnetometers 300. The user-borne device 100 and/or the at least one magnetic object 210 may be mobile, i.e., freely movable within the reference coordinate system XYZ. In other words, during a user operation (i.e., an operation wherein the user-borne device 100 and/or the at least one magnetic object 110 is operated by a user), the location of the user-borne device 100 within the sensing volume M and/or relative to an interaction surface 210 may be manipulated by a user within the sensing volume M.

The at least one magnetic object 110 may be a permanent magnet. In embodiments, the at least one magnetic object 110 may be configured to generate a non-zero magnetic field. It may comprise a paramagnetic or diamagnetic material. In embodiments, the at least one magnetic object 110 may comprise a ferromagnetic material or a ferrimagnetic material.

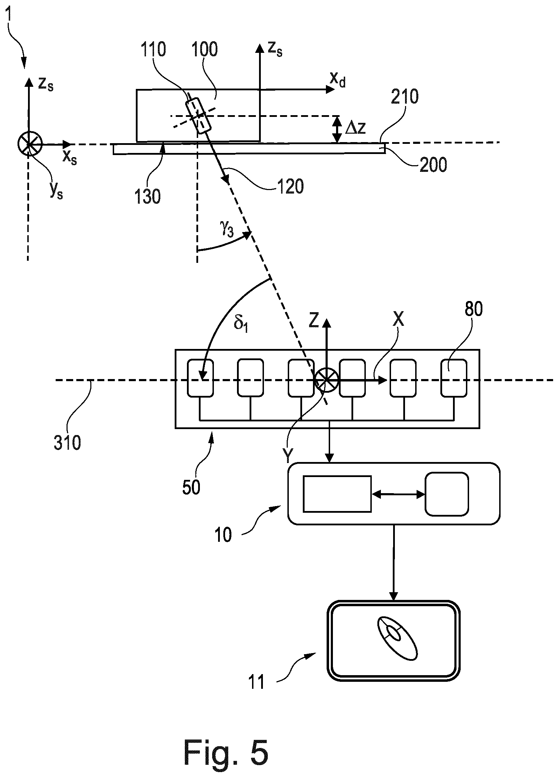

Fig. 5 schematically illustrates the resolution of the location of a magnetic object (for example, as comprised in a user-borne device peripheral device 50 relative to a magnetometer plane.

Determining a user-borne device location may comprise determining a magnetic object location of the at least one magnetic object 110 which is indicative of the user-borne device location. Specifically, determining a user-borne device location may comprise determining a position vector indicative of a magnetic object position and/or determining a magnetic moment vector 120 indicative of a magnetic object orientation of the at least one magnetic object 110. Because the magnetic object 110 is coupled to the user-borne device 100, the location of the magnetic object 110 may indicate the location of the user-borne device 100.

The user-borne device location may be indicative of an absolute user-borne device location with respect to the magnetometer plane 310, specifically the reference coordinate system XYZ, and/or a relative user-borne device location with respect to the interaction surface 210. Determining a user-borne device location indicative of an absolute user-borne device location may comprise determining an absolute magnetic object location. The absolute magnetic object location may be indicative of an absolute magnetic object position, magnetic object strength and/or an absolute magnetic object orientation of the at least one magnetic object 110 relative to the reference coordinate system XYZ. Specifically, the absolute magnetic object location may be determined based on the obtained magnetic field measurements from a plurality of magnetometers 80. Thereby, the absolute position and/or absolute orientation of the at least one magnetic object 110 in the reference coordinate system XYZ can be determined.

In embodiments, determining an absolute magnetic object location may comprise generating magnetic field measurement data based on the obtained magnetic field measurements. The magnetic field measurement data may be indicative of a magnetic field position, a magnetic field orientation and/or a magnetic field strength relative to the magnetic object 110 relative to the reference coordinate system XYZ. Determining an absolute magnetic object location may further comprise processing magnetic field measurement data to relate magnetic field measurement data to an absolute magnetic object location. For instance, an estimation filter may be used (such as Kalman filter, or extended Kalman filter) to evaluate the absolute magnetic object location related to the magnetic field measurement data.

The absolute magnetic object location may include a magnetic moment vector 120 and/or an absolute position vector associated with the at least one magnetic object 110. The magnetic moment vector 120 may be indicative of a magnetic object orientation and the magnetic strength of the magnetic object. The absolute position vector may be indicative of a magnetic object position with respect to the reference coordinate system XYZ. In embodiments, the absolute magnetic object orientation may be defined by a first set of magnetic object inclination angles δ1, δ2, δ3 measured between the magnetometer plane 310 and the magnetic moment vector 120. The first set of magnetic object orientation angles δ1, δ2, δ3 may be measured relative to the reference coordinate axes X, Y, Z, more specifically between the magnetic moment vector 120 and the respective axes X, Y, Z of the reference coordinate system XYZ.

For example, the first magnetic object orientation angle 61 may be defined between the first reference axis X and the magnetic moment vector 120, more specifically in the XZ-plane. In embodiments, two angles with respect to the magnetometer plane 310 may be sufficient to define the absolute magnetic object orientation of the magnetic object 110. Specifically when a magnetic dipole model is used, two angles with respect to the magnetometer plane 310 may be sufficient to define the absolute magnetic object orientation of the magnetic object 110. More specifically, when the magnetic object 110 is symmetrical along the magnetization axis, i.e. rotationally symmetric magnetized, two angles with respect to the magnetometer plane 310 may be sufficient to define the absolute magnetic object orientation of the magnetic object 110. In some embodiments, absolute position vector may be defined by a first set of cartesian coordinates defined within the reference coordinate system XYZ.

The magnetic moment vector 120 and/or the absolute position vector may be determined based on an implementation of a measurement model associating each measurement of a magnetometer of the plurality of magnetometers comprised in the peripheral 50 with a location of the at least one magnetic object 110 in the reference coordinate system XYZ. The model may be typically constructed from physical equations of electromagnetism, more specifically equations of magnetostatics. To establish this model, the at least one magnetic object 110 may be approximated by a magnetic dipole. Each magnetometer of the plurality of magnetometers comprised in the peripheral 50 may be a vector magnetometer and may be configured to measure the magnetic field in one, two or three dimensions.

Fig. 5 schematically illustrates the resolution of the position of a magnetic object relative to a magnetometer plane.

Referring to Fig. 5, determining a user-borne device location indicative of a relative user-borne device location relative to the peripheral device 50 may comprise determining a relative magnetic object location. The relative magnetic object location may be indicative of a relative magnetic object position and/or a relative magnetic object orientation. The relative magnetic object position may be a position of the at least one magnetic object 110 with respect to the interaction surface 210, more specifically to the interaction surface coordinate system xs, ys, zs.

The relative magnetic object orientation may be an orientation of the at least one magnetic object 110 with respect to the interaction surface 210, more specifically to the interaction surface coordinate system xs, ys, zs. The relative magnetic object location may include a magnetic moment vector 120 and/or a relative position vector Δxs, Δys, Δzs associated with the at least one magnetic object 110. The magnetic moment vector 120 may be indicative of a relative magnetic object orientation and/or wherein the relative position vector Δxs, Δys, Δzs is indicative of a relative magnetic object position with respect to the interaction surface coordinate system xs, ys, zs. In embodiments, the relative position vector may be understood as a vector from the origin of the surface coordinate system xs, ys, zs to the center of mass or dipole center of the magnetic object 110.

In embodiments, the relative magnetic object orientation may be defined by a second set of magnetic object inclination angles γ1, γ2, γ3 determined between the interaction surface 210 and the magnetic moment vector 120. In other words, the relative magnetic object orientation may be defined by a set of magnetic object inclination angles γ1, γ2, γ3 relative to the interaction surface coordinate axes xs, ys, zs.

Specifically, a first magnetic object inclination angle γ1 (not shown in Fig. 5) may be determined between the first interaction surface axis xs and the magnetic moment vector 120. A second magnetic object inclination angle γ2 (not shown in Fig. 5) may be determined between second interaction surface axis ys and the magnetic moment vector 120. A vertical magnetic object inclination angle γ3 may be determined between vertical interaction surface axis zs and the magnetic moment vector 120. For example, the vertical magnetic object inclination angle γ3 may be defined between the vertical interaction surface axis zs and the magnetic moment vector 120. Specifically, the vertical magnetic object inclination angle γ3 may be defined between the magnetic moment vector 120 and the vertical interaction surface axis zs or an axis parallel thereto such that the vertical magnetic object inclination angle γ3 can only range between 0° and 90°. In embodiments, two angles with respect to the magnetometer plane 310 may be sufficient to define the relative magnetic object orientation of the magnetic object 110.

According to an embodiment, the processing described can be performed by the controller 52 comprised within the peripheral 50. In this case, location data (comprising position and/or orientation signals representative of the user-borne device 110) is transmitted via the communication interface 53 of the peripheral 50 to a host device 10 to which the peripheral is connected. The location data can be represented, for example, in a device driver of the operating system of the host device 10. In this case, the location data is available to a range of applications executed by the operating system of the host device. In another embodiment, the location data (comprising position and/or orientation signals representative of the user-borne device 110) is computed by device driver software of the host device 10, from precursor location signals transmitted by the peripheral 50.

The arrangement of one or more pluralities of magnetometers 80 in the peripheral 50 is, thus, associated with the range of magnetic object inclination angles, and the distance from the electronic device at which such angles can be reliably determined, as two examples. In other words, the disposition of the one or more pluralities of magnetometers 80 in the peripheral 50 determines the sensing volume M within which it is possible to reliably use the user-borne device. Therefore, beneficial arrangements of the peripheral 50 will now be discussed.

According to an embodiment, the support 51 comprises, or is, a 3D printed or encapsulated electronics unit, and the plurality of magnetometers 54 are mounted inside the 3D printed or encapsulated electronics unit.

According to an embodiment, the peripheral 50 comprises an enclosure configured to surround the support 51, plurality of magnetometers 54, controller 52, and communications interface 53. According to an embodiment, the enclosure comprises a magnetically transparent material, more specifically a plastic, wood or aluminum.

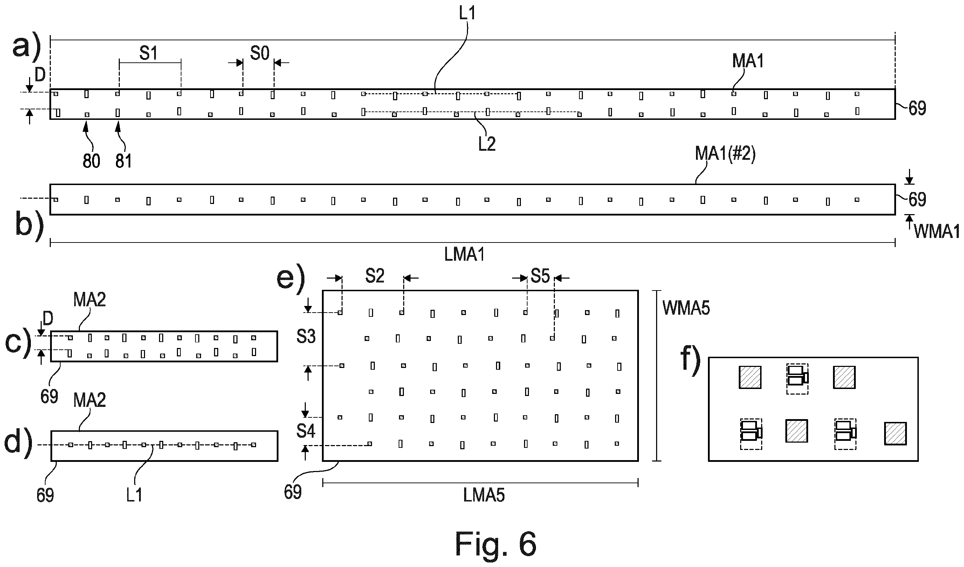

Fig. 6 schematically illustrates variants of magnetometer arrays.

Fig. 6 a) schematically illustrates a magnetometer array MA1 mounted on a printed circuit board 69 comprising 27 regularly spaced magnetometers 80 and 27 accompanying regularly spaced sets of passive components 81. The components are disposed in two rows along a longitudinal axis of the printed circuit board 69 of MA1. The components are separated by separation distance D.

Fig. 6b) schematically illustrates a magnetometer array MA1(#2) comprising a single line of 14 regularly spaced magnetometers regularly interspersed with 14 regularly spaced passive components along a longitudinal axis L2.

Fig. 6c) and 6d) schematically illustrate shorter variants of MA1 and MA1(#2) comprising 11 and 6 magnetometers, respectively.

Fig. 6e) schematically represents a 2D magnetometer array comprising an offset matrix of magnetometers.

Fig. 6f) schematically represents an enlarged view of the spacing of magnetometers 80 and complexes of passive components 81.

According to an embodiment the support 51 comprises, or is, at least one printed circuit board 69, and the plurality of magnetometers 54 are mounted on the at least one printed circuit board 69.

According to an embodiment, each magnetometer 80 of the plurality of magnetometers 54 is separated from any other magnetometer of the plurality of magnetometers 54 by a distance S1-S5 in the magnetometer plane 310, wherein the distance is greater than 5mm, 6mm, 7mm, 8mm, 9mm, 10mm, 15mm, or 20mm.

According to an embodiment, the plurality of magnetometers 54 is disposed along at least one longitudinal axis of the support 51. According to an embodiment, the plurality of magnetometers 54 is disposed along a single longitudinal axis L1 of the support 51 .

According to an embodiment, a first subset of the plurality of magnetometers 54 is disposed along a first longitudinal axis L1 of the support 51, and a second subset of the plurality of magnetometers 54 is disposed along a second longitudinal axis L2 of the support 51.

According to an embodiment, a first subset of the plurality of magnetometers 54 is disposed in the longitudinal direction X, and a second subset of the plurality of magnetometers 54 is disposed in the transverse direction Y or direction of the vertical Z extent of the peripheral coordinate system.

According to an embodiment, a first subset of the plurality of magnetometers 54 is disposed in the transverse direction Y, and a second subset of the plurality of magnetometers 54 is disposed in the longitudinal direction X or direction of the vertical Z extent of the peripheral coordinate system.

According to an embodiment, a first subset of the plurality of magnetometers 54 is disposed in the direction of the vertical Z extent of the peripheral coordinate system, and a second subset of the plurality of magnetometers 54 is disposed in the longitudinal direction X or in the transverse direction Y.

According to an embodiment, a first subset of the plurality of magnetometers 54 is disposed in the longitudinal direction X, a second subset of the plurality of magnetometers 54 is disposed in the transverse direction Y, and a third subset of the plurality of magnetometers 54 is disposed in a direction of the vertical Z extent of the peripheral coordinate system.

According to an embodiment, each magnetometer 80 comprised in the second subset of the plurality of magnetometers 54 is longitudinally offset by the same distance S0, S0, S5 along the second longitudinal axis compared to a corresponding longitudinal offset distance along the first longitudinal axis of a corresponding magnetometer of the first subset of the plurality of magnetometers 54.

According to an embodiment, each magnetometer comprised in the second subset of the plurality of magnetometers 54 is longitudinally offset by a different distance S0, S0, S5 along the second longitudinal axis L2 compared to a corresponding longitudinal offset distance along the first longitudinal axis L1 of a corresponding magnetometer of the first subset of the plurality of magnetometers 54.

According to an embodiment, the plurality of magnetometers 54 at least partially defines a sensing volume of a user-borne device, in use. According to an embodiment, an interaction surface 210 is defined relative to the plurality of magnetometers 54 within the sensing volume.

According to an embodiment, the plurality of magnetometers 54 is disposed on the support 51 in a matrix arrangement in the longitudinal and transverse directions.

According to an embodiment, the plurality of magnetometers 54 comprises more than five magnetometers 80, and fewer than 500 magnetometers 80. According to an embodiment, the plurality of magnetometers 54 comprises between 5 and 50 magnetometers.

According to an example, each magnetometer 80 of the plurality of magnetometers is arranged so that the magnetometers 80 are far enough from each other to avoid perturbation. As an example, each magnetometer 80 is separated by greater than 5 mm, greater than 3 mm, greater than 1 mm from any adjacent magnetometer 80.

According to an embodiment, the magnetometers 80 are arranged in one row along the longitudinal axis L of the peripheral 50.

According to an embodiment, the magnetometers 80 are arranged in two rows along the longitudinal axis L of the peripheral 50.

According to an embodiment, the magnetometer 80 arrangement is provided in two rows, with magnetometers comprised in the first row shifted by half of the spacing pitch relative to magnetometers 80 comprised in the second row.

According to an embodiment, the magnetometers 80 of the plurality of magnetometers are arranged as four rows, arranged as a square matrix. However, in some embodiments, the magnetometers 80 of the plurality of magnetometers may be arranged in other arrangements of matrices.

According to an embodiment, the longitudinal extent of the support 51 is greater than 255mm, the first subset of the plurality of magnetometers 54 comprises between 5 and 50 magnetometers, and the second subset of magnetometers comprises between 5 and 50 magnetometers. According to an embodiment, the controller 52 is configured to obtain a plurality of magnetic field measurements associated with at least one magnetic object measured with the plurality of magnetometers 54, wherein the at least one magnetic object is coupled to a user-borne device.

According to an embodiment, the controller 52 is configured to determine a location of the user-borne device relative to the peripheral coordinate system using the magnetic field measurements.

According to an embodiment, the controller 52 is configured to communicate the determined location of the user-borne device to at least one host device via the communication interface.

According to an embodiment, the controller 52 is configured to communicate the plurality of magnetic field measurements to a host device via the communication interface 53. According to an embodiment, the controller 52 is configured to detect that the peripheral device 50 has been operably coupled to a host device 10, and the controller 52 is configured to perform a calibration routine in response to the detection.

Dependent on the format of the peripheral 50 and its physical relationship to the host device 10, and the presence of other objects containing magnetically active materials, calibration of the peripheral 50 may improve the accuracy of location detection. One example of a calibration routine is that upon plugging the peripheral 50 into the host device 10, the screen 11 of host device 10 requests that the user moves the user device 100 along a predefined set of trajectories. The host device 10 obtains a set of uncalibrated signals from the peripheral 50. The host device 10 performs signal processing on the set of uncalibrated signals to obtain a set of correction coefficients enabling improved location detection performance. The host device 10 transmits the set of correction coefficients to the peripheral 50. The peripheral 50 applies the correction coefficients to new measurements. Alternatively, the host device 10 applies a set of measurements received from the peripheral 50.

According to an embodiment, the controller 52 is configured to store a data structure defining a configuration of the plurality of magnetometers 54, and to communicate the data structure to the host device 10 when the peripheral device 50 has been operably coupled to the host device.

For example, the controller 52 may be configured to transmit one, or any combination, of the dimensions LMA1, WMA2, D, S0-S5 illustrated in Fig. 6. In embodiments, the controller 52 is configured to transmit a magnetometer plane angle of the peripheral device 50. Alternatively, the controller 52 may transmit an identifier that enables a host device to download a data structure defining a configuration of the plurality of magnetometers 54 from a data storage source, for example a data storage source connected to the Internet. An example application is that a device driver operated by the host device 10 can use the information transmitted in the data structure to improve the accuracy of data received from the peripheral device 50.

According to an embodiment, the communication interface is configured to communicably couple the peripheral device 50 to one, or any combination, of a laptop computer, a desktop computer, a tablet computer, a smartphone, a smartwatch, a television, an interactive whiteboard, a virtual reality headset, a wireless access point, a keyboard, a further peripheral device and/or a display projector.

According to an embodiment, the peripheral device 50 further comprises:
- an orientation sensor mounted on the first and/or the second face of the support 51, wherein the orientation sensor is configured to detect that either the first or the second face of the support 51 is closer to a supporting surface of the peripheral device 50 and/or host device to which the peripheral device 50 is coupled. According to an embodiment, the orientation sensor is an optical sensor, a potentiometer, an encoder, an end-stop detector, or an accelerometer. In some embodiments, the orientation sensor may be configured to detect an orientation of either the first or the second face of the support 51 relative to a supporting surface of the peripheral device 50 and/or host device to which the peripheral device 50 is coupled.

When placing the peripheral 50 on a surface 200, cuboid shape peripherals 50 enable a user to place the peripheral 50 in any one of four angular states about the longitudinal axis of the peripheral 50. The plurality of magnetometers 54 comprised within the peripheral 50 may experience different performance based on which of the four angular states the peripheral 50 is disposed in. Accordingly, the orientation sensor detects the angular state of the peripheral 50 when to the controller 52. The controller 52 is capable of updating the correction coefficients applied to signals from the plurality of magnetometers 54 based on the detected under the state of the peripheral 50. In an example, the calibration routine incorporates information from the orientation detector.

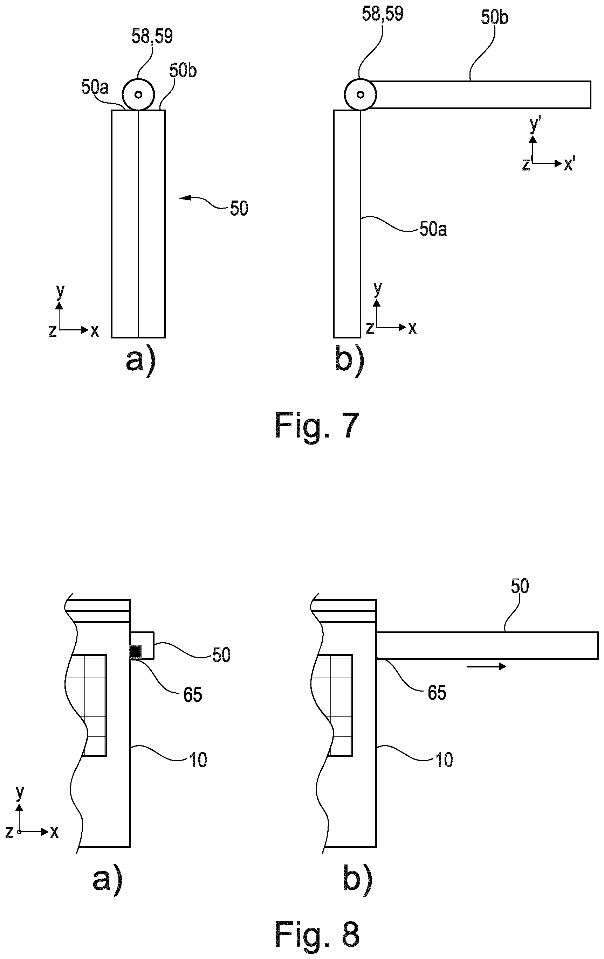

Figs. 7A and 7B schematically illustrate a plan view of an articulated peripheral in closed and open positions.

According to an embodiment, the peripheral device 50a further comprises at least one further support 50b defining a further coordinate system of the peripheral device 50a, wherein the further support 50b is displaceable relative to the support 51 and an articulated joint 58 coupling the further support to the support 51.

According to an embodiment, the at least one further support 50b is displaceable relative to the support 51 in a plane defined by the longitudinal and transverse directions of the peripheral coordinate system, or in a plane defined by the longitudinal and vertical directions of the peripheral coordinate system. According to an embodiment, the at least one further support is displaceable relative to the support 51 in a volume defined by the longitudinal, transverse, and vertical directions of the peripheral coordinate system. According to an embodiment, the at least one further support is rotatable about the longitudinal direction of the support 51.

According to an embodiment, the peripheral device further comprises a displacement sensor 59 configured to detect a spatial displacement between the support 51 and the at least one further support, in use. According to an embodiment, the displacement sensor is configured to measure an angle and/or a distance between the support 51 and the at least one further support, or an accelerometer comprised in the support 51 or at least one further support. In some embodiments, the displacement sensor may be an optical sensor and/or an end-stop detector.

The controller 52 is configured to read the angular displacement detected by the displacement sensor 59, and to adjust coefficients or data structures in the controller 52 used to compute the location (positional orientation) of user device 100, based on the angular displacement of the at least one further support 50b.

Accordingly, an articulated peripheral 50 can be provided in which a sensing volume M of arbitrary shape can be produced by unfolding at least one further peripheral 50b relative to a first peripheral 58. In embodiments, articulated peripheral 50 can comprise two, three, four, five, six, seven, eight, nine, ten, or more individual articulated joints.

Figs. 8A and 8B schematically illustrate a slidable peripheral in stored and deployed positions.

According to an embodiment, the at least one further support is slidably connected to the support 51, and slidable in the longitudinal, transverse, or vertical direction of the peripheral coordinate system. For example, the peripheral 50 may comprise a telescopic enclosure enabling a first half of the peripheral 50a and the second half of the peripheral 50b to translate relatively to each other along a common longitudinal axis. Each of the halves of the peripheral 50a, 50b may comprise a plurality of magnetometers 54. One, or both, of the halves of the peripheral 50 may comprise a linear encoder to the first and second halves of the peripheral 50. The output signal from the linear encoder is provided to a controller 52 and/or the host device 10 to enable of the location of user device 100 within the sense volume M at arbitrary linear extensions of the telescopic peripheral 50.

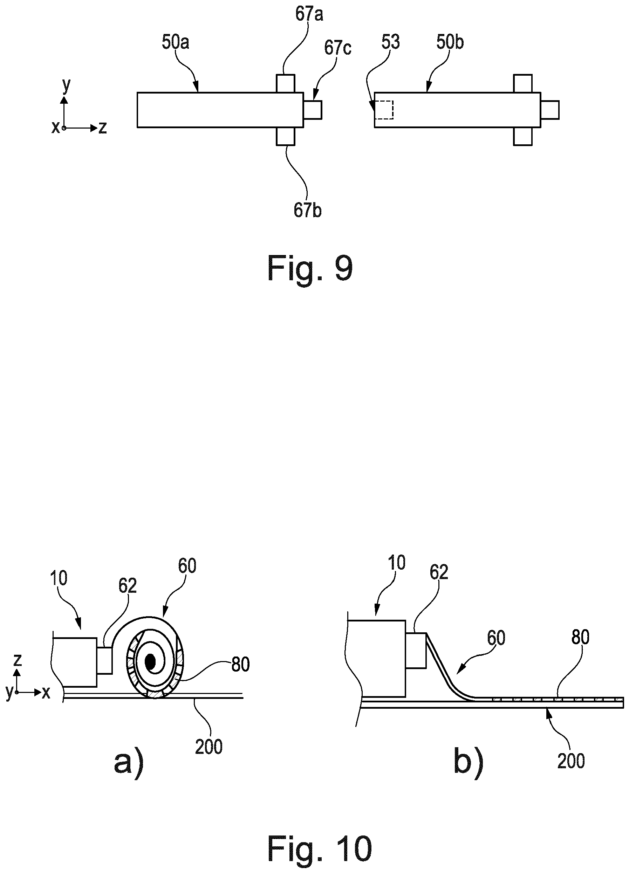

Fig. 9 schematically illustrates a system of two pluggable peripheral 50a, 50b.

According to an embodiment, the support 51 and the at least one further support each comprise mutually pluggable connections 55, enabling connection of the support 51 and the at least one further support in a longitudinal, transverse, or vertical direction of the peripheral coordinate system. According to an embodiment, the support 51 comprises a contact sensor to detect that the support 51 and the further support are connected together, and/or have been disconnected. In some embodiments, the contact sensor may be configured to detect an electrical connection between the support 51 and the further support when the support 51 is connected to the further support. In this case, the contact sensor may detect that the support 51 and the further support are connected together based on detecting the electrical connection.

The first and second pluggable peripheral 50a, 50b may each comprise components as recited by the first aspect. Furthermore, the communication interface 53 enables location signals to be transferred from the second pluggable peripheral 50b to the first pluggable peripheral 50a. In an embodiment, the first pluggable peripheral 50a and the second pluggable peripheral 50b form a communication network, such as an ad hoc communication network, as soon as they are attached. Although not shown, either of the pluggable peripheral 50a and/or 50b can be interfaced with a host device 10.

The first pluggable peripheral 50a may comprise at its distal end one or more connection sensors 67a-c. The second pluggable peripheral 50b may comprise at a proximal end a communication interface a recess. In embodiments, to promote secure connection, the distal and proximal ends of the pluggable peripheral 50a, 50b comprise one or more magnets to enable a snap fit connection. According to an embodiment, each of the connection sensors 67a-c is arranged on an alternative axis of the first pluggable peripheral 50a. A system of pluggable peripherals 50 can, thus, be provided in arbitrary spatial arrangements. Such a system of pluggable peripherals 50 can comprise, for example, two, three, four, five, six, seven, eight, nine, ten, or more pluggable peripherals 50. Because the connection sensors 67a-c are positioned at known locations on each pluggable peripheral 50, the pluggable peripheral 50 can cooperatively communicate to define the orientation of each pluggable peripheral relative to the next connected pluggable peripheral. This information is transmitted to a controller of the peripherals 50, and/or the host device 10, enabling a coherent sensing volume of the network of peripherals 50 to be computed for an arbitrary arrangement of peripherals 50 using signal processing.

Figs. 10A and 10B schematically illustrate a peripheral comprised in a fabric substrate in a stored and deployed state.

According to an embodiment, the enclosure comprises a flexible mat 60 bonded to an anchor unit 62, and the flexible mat is deployable onto an interaction support 200, in use. In examples, the flexible mat 60 comprises between one and ten, preferably four 57a-d flexible support portions 57a-d. According to an example, the flexible mat comprises a fabric or flexible plastic.

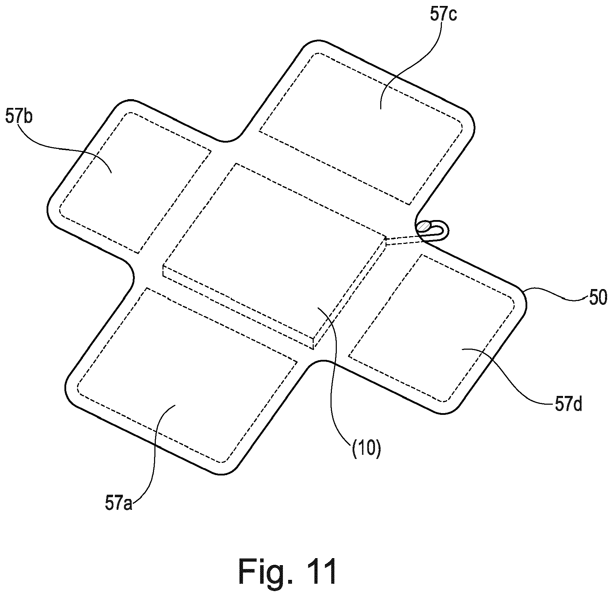

Fig. 11 schematically illustrates a deployed peripheral comprised in a fabric substrate According to a second aspect, there is provided a host device 10 comprising:
- a stowage portion 15 configured to store the peripheral device 50 according to the first aspect or its embodiments. In examples, the peripheral device 50 is deployable out of the stowage portion 15 by a sliding, rotation, or unfolding movement.

According to an embodiment, the host device 10 further comprises a deployment detector 65. The deployment detector 65 is configured to detect the deployment of the peripheral device 50 out of the stowage portion of the host device.

According to a third aspect, there is provided a system 1 comprising a host device 10 according to the second aspect, and a peripheral device 50 according to the first aspect, wherein the peripheral device 50 is communicably coupled to the host device 50; and a user-borne device 100 comprising at least one magnetic object 110 and/or magnetic field generator. The peripheral device 50 is configured to obtain magnetic field measurements associated with the user-borne device 100, to determine a location of the user-borne device 100 relative to the peripheral coordinate system of the peripheral device 50, and to communicate the location of the user-borne device from the peripheral device 50 to the host device 10.

According to an embodiment, the host device 10 is configured to receive the location of the user-borne device 100 from the peripheral device 50, wherein the host device 10 is configured to update the location of the user-borne device 100 in a device driver executed by the host device 10.

According to an embodiment, the device driver executed by the host device 10 is configured to receive a calibration command from a user of the host device 10, and to communicate the calibration command to the peripheral device 50. The peripheral device 50 is configured to obtain magnetic field measurements associated with calibration actions of the user-borne device 100, relative to the peripheral coordinate system of the peripheral device 50, and to communicate the magnetic field measurements associated with calibration actions of the user-borne device 100, or derived data, from the peripheral device 50 to the host device 10.

Fig. 12 schematically illustrates a method according to the third aspect.

According to a fourth aspect, there is provided a computer-implemented method 70 for determining a location of a user-borne device, comprising:
- obtaining 72, at a peripheral device 50 according to the first aspect, or its embodiments, magnetic field measurements associated with at least one magnetic object 110 of the user-borne device 100 and measured with a plurality of magnetometers 54 comprised within the peripheral device 50;
- determining 74, at either the host device 10, or the peripheral device 50, the location of the user-borne device 100 based on the magnetic field measurements;
- communicating 76 the location of the user-borne device 100 to a device driver instantiated in a user environment of the host device.

According to an embodiment, the method further comprises:
- detecting that either a first or a second face of the support 51 is closer to a supporting surface of the peripheral device 50 and/or a host device 10 to which the peripheral device 50 is coupled using an orientation sensor mounted on the first and/or the second face of the support 51; and
- determining, at either the host device, or the peripheral device, the location of the user-borne device based on the magnetic field measurements using the detection that either the first or the second face of the support 51 is closer to a supporting surface.

According to an embodiment, the method may comprise detecting an orientation of either the first or the second face of the support 51 relative to a supporting surface of the peripheral device 50 and/or host device to which the peripheral device 50 is coupled, using an orientation sensor mounted on the first and/or the second face of the support 51.

According to an embodiment, the method further comprises:
- detecting a spatial displacement of the support 51 relative to at least one further support using a displacement sensor 59 comprised in the support 51; and
- determining, at either the host device, or the peripheral device, the location of the user-borne device based on the magnetic field measurements using the detected spatial displacement.

According to a fifth aspect, there is provided a computer program element comprising machine readable instructions which, when executed, cause a computer to carry out the computer implemented method 70 according to the fourth aspect.

According to a sixth aspect, there is provided a computer readable medium comprising the computer program element according to the sixth aspect.

### EMBODIMENTS

Although the present invention has been described above and is defined in the attached claims, it should be understood that the invention may alternatively be defined in accordance with the following embodiments:
1. A peripheral device (50) comprising:
   - a support (51) defining a peripheral coordinate system of the peripheral device (50), wherein the peripheral device (50) has a longitudinal, transverse and vertical extent;
   - a plurality of magnetometers (54) disposed on the support (51);
   - a controller (52) communicably coupled to the plurality of magnetometers (54, 80); and
   - a communication interface (53) communicably coupled to the controller (52).
2. The peripheral (50) according to embodiment 1,
   wherein the support (51) defines a magnetometer plane (310) in a longitudinal (X) and transverse (Y) direction, or a longitudinal (X) and vertical (Z) extent of the peripheral coordinate system.
3. The peripheral (50) according to embodiment 2,
   wherein the magnetometer plane (310) intersects a majority, or each, magnetometer (80) of the plurality of magnetometers (54).
4. The peripheral (50) according to one of embodiments 2 or 3,
   wherein each magnetometer (80) of the plurality of magnetometers (54) is separated from any other magnetometer of the plurality of magnetometers (54) by a distance (S1-S5) in the magnetometer plane (310), wherein the distance is greater than 5mm, 6mm, 7mm, 8mm, 9mm, 10mm, 15mm, or 20mm.
5. The peripheral device (50) according to one of the preceding embodiments,
   wherein the plurality of magnetometers (54) is disposed along at least one longitudinal axis of the support (51), more specifically wherein the plurality of magnetometers (54) is disposed along a single longitudinal axis (L1) of the support (51).
6. The peripheral device (50) according to one of embodiments 1 to 5,
   wherein a first subset of the plurality of magnetometers (54) is disposed along a first longitudinal axis (L1) of the support (51), and a second subset of the plurality of magnetometers (54) is disposed along a second longitudinal axis (L2) of the support (51).
   6A. The peripheral device (50) according to any one of claims 2 to 5, wherein a first subset of the plurality of magnetometers (54) is disposed in the longitudinal direction (X), and wherein a second subset of the plurality of magnetometers (54) is disposed in the transverse direction (Y) or direction of the vertical (Z) extent of the peripheral coordinate system.
   6B. The peripheral device (50) according to any one of claims 2 to 5, wherein a first subset of the plurality of magnetometers (54) is disposed in the transverse direction (Y), and wherein a second subset of the plurality of magnetometers (54) is disposed in the longitudinal direction (X) or direction of the vertical (Z) extent of the peripheral coordinate system.
   6C. The peripheral device (50) according to any one of claims 2 to 5, wherein a first subset of the plurality of magnetometers (54) is disposed in the direction of the vertical (Z) extent of the peripheral coordinate system, and wherein a second subset of the plurality of magnetometers (54) is disposed in the longitudinal direction (X) or in the transverse direction (Y).
   6D. The peripheral device (50) according to any one of claims 2 to 5, wherein a first subset of the plurality of magnetometers (54) is disposed in the longitudinal direction (X), wherein a second subset of the plurality of magnetometers (54) is disposed in the transverse direction (Y), and wherein a third subset of the plurality of magnetometers (54) is disposed in a direction of the vertical (Z) extent of the peripheral coordinate system.
7. The peripheral device (50) according to embodiment 6,
   wherein each magnetometer (80) comprised in the second subset of the plurality of magnetometers (54) is longitudinally offset by the same distance (S0, S0, S5) along the second longitudinal axis compared to a corresponding longitudinal offset distance along the first longitudinal axis of a corresponding magnetometer of the first subset of the plurality of magnetometers (54).
8. The peripheral device (50) according to embodiment 6,
   wherein each magnetometer comprised in the second subset of the plurality of magnetometers (54) is longitudinally offset by a different distance (S0, S0, S5) along the second longitudinal axis (L2) compared to a corresponding longitudinal offset distance along the first longitudinal axis (L1) of a corresponding magnetometer of the first subset of the plurality of magnetometers (54).
9. The peripheral device (50) according to one of embodiments 6 to 8,
   wherein the first subset of the plurality of magnetometers (54) is disposed on a first face of the support (51), and the second subset of the plurality of magnetometers (54) is disposed on
   a second face of the support (51).
10. The peripheral device (50) according to embodiments 1 to 4,
   wherein the plurality of magnetometers (54) is disposed on the support (51) in a matrix arrangement in the longitudinal and transverse directions.
11. The peripheral device (50) according to one of the preceding embodiments,
   wherein the transverse extent of the support (51) is less than 30mm, more specifically less than 20 mm, and most specifically less than 10mm.
12. The peripheral device (50) according to one of the preceding embodiments,
   wherein the longitudinal extent of the support (51) is less than 1000mm, 500mm, 400mm, 300mm, more specifically less than 250mm, 200mm, 175mm, 150mm, 125mm, 100mm, 75mm, or 50mm.
13. The peripheral device (50) according to one of the preceding embodiments,
   wherein the longitudinal extent of the peripheral device (50) is at least two times greater than the transverse extent of the peripheral device (50).
14. The peripheral device (50) according to one of the preceding embodiments,
   wherein the longitudinal extent of the peripheral device (50) is at least two times greater than the vertical extent of the peripheral device (50).
15. The peripheral device (50) according to one of the preceding embodiments,
   wherein the plurality of magnetometers (54) at least partially defines a sensing volume of a magnetic user device, in use.
16. The peripheral device (50) according to embodiment 15,
   wherein the interaction surface (210) is defined relative to the plurality of magnetometers (54) within the sensing volume.
17. The peripheral device (50) according to one of embodiments 1 to 16,
   wherein the plurality of magnetometers (54) comprises more than five magnetometers (80), and fewer than 500 magnetometers (80).
18. The peripheral device (50) according to one of embodiments 1 to 16,
   wherein the longitudinal extent of the support (51) is greater than 255mm, or greater than 100mm, or greater than 50mm, and the plurality of magnetometers (54) comprises between 5 and 50 magnetometers.
19. The peripheral device (50) according to one of embodiments 6 to 16,
   wherein the longitudinal extent of the support (51) is greater than 255mm, the first subset of the plurality of magnetometers (54) comprises between 5 and 50 magnetometers, and the second subset of magnetometers comprises between 5 and 50 magnetometers.
20. The peripheral device (50) according to one of the preceding embodiments,
   wherein the controller is configured to obtain a plurality of magnetic field measurements associated with at least one magnetic object measured with the plurality of magnetometers (54), wherein the at least one magnetic object is coupled to a user-borne device.
21. The peripheral device (50) according to embodiment 20,
   wherein the controller is configured to determine a location of the user-borne device relative to the peripheral coordinate system using the magnetic field measurements.
22. The peripheral device according to embodiment 21, wherein the controller is configured to communicate the determined location of the user-borne device to at least one host device via the communication interface.
23. The peripheral device (50) according to one embodiments 20 to 22,
   wherein the controller is configured to communicate the plurality of magnetic field measurements to a host device via the communication interface.
24. The peripheral device (50) according to one of the preceding embodiments,
   wherein the controller is configured to detect that the peripheral device has been operably coupled to a host device, and the controller is configured to perform a calibration routine in response to the detection.
25. The peripheral device (50) according to one of the preceding embodiments,
   wherein the communication interface is one, or more, of a UART interface, a USART interface, an SPI interface, an I2C interface, an I3C interface, a PCI interface, USB-C (TM) interface, a USB-A (TM) interface, a Thunderbolt (TM) interface, a Bluetooth (TM) interface, or a WiFi (TM) interface.
26. The peripheral device (50) according to one of the preceding embodiments,
   wherein the controller is configured to store a data structure defining a configuration of the plurality of magnetometers (54), and to communicate the data structure to the host device when the peripheral device (50) has been operably coupled to the host device.
27. The peripheral device (50) according to one of the preceding embodiments,
   wherein the communication interface is configured to communicably couple the peripheral device (50) to one, or any combination, of a laptop computer, a desktop computer, a tablet computer, a smartphone, a smartwatch, a television, an interactive whiteboard, a virtual reality headset, a wireless access point, a keyboard, a further peripheral device and/or a display projector.
28. The peripheral device (50) according to one of the preceding embodiments, further comprising:
   - an orientation sensor mounted on the first and/or the second face of the support (51);
   wherein the orientation sensor is configured to detect that either the first or the second face of the support (51) is closer to a supporting surface of the peripheral device (50) and/or host device to which the peripheral device (50) is coupled.
29. The peripheral device (50) according to embodiment 28,
   wherein the orientation sensor is an optical sensor, a potentiometer, an encoder, an end-stop detector, or an accelerometer.
30. The peripheral device (50) according to one of the preceding embodiments, further comprising:
   - at least one further support defining a further coordinate system of the peripheral device (50), wherein the further support is displaceable relative to the support (51); and
   - an articulated joint coupling the further support to the support (51).
31. The peripheral device (50) according to embodiment 30,
   wherein the at least one further support is displaceable relative to the support (51) in a plane defined by the longitudinal and transverse directions of the peripheral coordinate system, or in a plane defined by the longitudinal and vertical directions of the peripheral coordinate system.
32. The peripheral device (50) according to embodiment 30,
   wherein the at least one further support is displaceable relative to the support (51) in a volume defined by the longitudinal, transverse, and vertical directions of the peripheral coordinate system.
33. The peripheral device (50) according to one of embodiments 29 to 32,
   wherein the at least one further support is rotatable about the longitudinal direction of the support (51).
34. The peripheral device (50) according to one of claims 29 to 33, further comprising:
   - a displacement sensor configured to detect a spatial displacement between the support (51) and the at least one further support, in use.
35. The peripheral device (50) according to embodiment 34,
   wherein the displacement sensor is configured to measure an angle between the support (51) and the at least one further support, or an accelerometer comprised in the support (51) or at least one further support.
36. The peripheral device (50) according to one of embodiments 29 to 35,
   wherein the support (51) and the at least one further support each comprise mutually pluggable connections (55), enabling connection of the support (51) and the at least one further support in a longitudinal, transverse, or vertical direction of the peripheral coordinate system.
37. The peripheral device (50) according to one of embodiments 29 to 36,
   wherein the support (51) comprises a contact sensor to detect that the support (51) and the further support are connected together, and/or have been disconnected.
38. The peripheral device (50) according to one of embodiments 29 to 37,
   wherein at least one further support is slidably connected to the support (51), and slidable in the longitudinal, transverse, or vertical direction of the peripheral coordinate system.
39. The peripheral device (50) according to one of the preceding embodiments,
   wherein the support (51) comprises, or is, at least one printed circuit board (69), and the plurality of magnetometers (54) are mounted on the at least one printed circuit board (69).
40. The peripheral device (50) according to one of embodiments 1 to 38,
   wherein the support (51) comprises, or is, a 3D printed or encapsulated electronics unit, and the plurality of magnetometers (54) are mounted inside the 3D printed or encapsulated electronics unit.
41. The peripheral device (50) according to one of embodiments 1 to 40, further comprising:
   - an enclosure configured to surround the support (51), plurality of magnetometers (54), controller (52), and communications interface (53).
42. The peripheral device (50) according to embodiment 41,
   wherein the enclosure comprises a magnetically transparent material, more specifically a plastic, wood or aluminium.
43. The peripheral device (50) according to embodiment 42,
   wherein the enclosure comprises a flexible mat (60) bonded to an anchor unit (62), wherein the flexible mat is deployable onto an interaction support (200), in use.
44. The peripheral device according to embodiment 43;
   wherein the flexible mat (60) comprises between one and ten, preferably four (57a-d) flexible support portions (57a-d).
45. The peripheral device (50) according to one of embodiments 42 or 43,
   wherein the flexible mat comprises a fabric or flexible plastic.
46. A host device (10) comprising:
   - a stowage portion (15) configured to store the peripheral device (50) according to one of embodiments 1 to 45, when the peripheral device (50) is not in use.
47. The host device (10) according to embodiment 43,
   wherein the peripheral device (50) is deployable out of the stowage portion (15) by a sliding, rotation, or unfolding movement.
48. The host device (10) according to one of embodiments 43 or 44, further comprising:
   - a deployment detector (65);
   wherein the deployment detector (65) is configured to detect the deployment of the peripheral device (50) out of the stowage portion of the host device.
49. A system (1) comprising:
   - a host device (10);
   - a peripheral device (50) according to one of embodiments 1 to 48, wherein the peripheral device (50) is communicably coupled to the host device (50); and
   - a user-borne device (100) comprising at least one magnetic object (110) and/or magnetic field generator;
      wherein the peripheral device (50) is configured to obtain magnetic field measurements associated with the user-borne device (100), to determine a location of the user-borne device (100) relative to the peripheral coordinate system of the peripheral device (50), and to communicate the location of the user-borne device from the peripheral device (50) to the host device (10).
50. The system (1) according to embodiment 49,
   wherein the host device (10) is configured to receive the location of the user-borne device (100) from the peripheral device (50), and wherein the host device (10) is configured to update the location of the user-borne device (100) in a device driver executed by the host device (10).
51. The system (1) according to embodiment 50,
   wherein the device driver executed by the host device (10) is configured to receive a calibration command from a user of the host device (10), and to communicate the calibration command to the peripheral device (50), wherein the peripheral device (50) is configured to obtain magnetic field measurements associated with calibration actions of the user-borne device (100), relative to the peripheral coordinate system of the peripheral device (50), and to communicate the magnetic field measurements associated with calibration actions of the user-borne device (100), or derived data, from the peripheral device (50) to the host device (10).
52. A computer-implemented method (70) for determining a location of a user-borne device, comprising:
   - obtaining (72), at a peripheral device (50) according to one of embodiments 1 to 45, magnetic field measurements associated with at least one magnetic object (110) of the user-borne device (100) and measured with a plurality of magnetometers (54) comprised within the peripheral device (50);
   - determining (74), at either the host device (10), or the peripheral device (50), the location of the user-borne device (100) based on the magnetic field measurements;
   - communicating (76) the location of the user-borne device (100) to a device driver instantiated in a user environment of the host device.
53. The computer-implemented method (70) according to embodiment 52, further comprising:
   - detecting that either a first or a second face of the support (51) is closer to a supporting surface of the peripheral device (50) and/or a host device (10) to which the peripheral device (50) is coupled using an orientation sensor mounted on the first and/or the second face of the support (51); and
   - determining, at either the host device, or the peripheral device, the location of the user-borne device based on the magnetic field measurements using the detection that either the first or the second face of the support (51) is closer to a supporting surface.
54. The computer-implemented method (70) according to embodiments 52 or 53, further comprising:
   - detecting a spatial displacement of the support (51) relative to at least one further support using a displacement sensor (59) comprised in the support (51); and
   - determining, at either the host device, or the peripheral device, the location of the user-borne device based on the magnetic field measurements using the detected spatial displacement.
55. A computer program element comprising machine readable instructions which, when executed, cause a computer to carry out the computer implemented method (70) according to one of embodiments 52 to 54.
56. A computer readable medium comprising the computer program element according to embodiment 55.

### REFERENCE NUMERALS

- X: first (length) reference axis
- Y: second (width) reference axis
- Z: vertical (height) reference axis
- xd: first device axis
- yd: second device axis
- zd: vertical device axis
- L(P): length of enclosure (peripheral)
- W(P): width of enclosure (peripheral)
- H: height of enclosure
- U: user
- α1: first rotation angle
- α2: second rotation angle
- δ1, δ2, δ3: first set of inclination angles
- γ1, γ2, γ3: second set of inclination angles
- β1, β2, β3: third set of interaction surface inclination angles
- M: Sensing Volume
- S0 - S5: magnetometer mounting pitch Magnetometers
- L1, L2: first and second longitudinal axes

- 1: System
- 8: User interaction surface
- 9: Hinge
- 10: Host device
- 11: Display
- 12: Enclosure
- 14: First surface of enclosure
- 15: Stowage portion for peripheral
- 16: Second surface of enclosure
- 18: Third surface of the enclosure
- 20: Fourth surface of the enclosure
- 30: Touchpad
- 32: Individual Magnetometer
- 34: Passive components
- 50: Peripheral Device

- 51: Support
- 52: Controller
- 53: Communication Interface
- 54: Plurality of magnetometers
- 55: Connector
- 56a, b 57a-d: Flexible support portions
- 58: Joint
- 59: Displacement Sensor
- 60: Flexible mat
- 62: Anchor unit
- 65: Deployment Detector
- 67a-c: Connection sensors
- 69: Printed Circuit Board
- 70: Method
- 72: Obtaining
- 74: Determining
- 76: Communicating
- 70: Method
- 72: Obtaining magnetic field measurements
- 74: Determining the location
- 76: Communicating the location
- 80a, b: Individual Magnetometer
- 81: Passive components
- 100: user-borne device
- 110: at least one magnetic object
- 112: Lid magnet
- 120: magnetic moment vector
- 130: contact surface or point
- 200: interaction support
- 210: interaction surface
- 300: plurality of magnetometers
- 310: magnetometer plane
- 400: processing unit
- 500: one or more output devices

## Claims

1. A peripheral device (50) comprising:
- a support (51) defining a peripheral coordinate system of the peripheral device (50),
wherein the peripheral device (50) has a longitudinal, transverse and vertical extent;
- a plurality of magnetometers (54) disposed on the support (51);
- a controller (52) communicably coupled to the plurality of magnetometers (54, 80); and
- a communication interface (53) communicably coupled to the controller (52).

2. The peripheral (50) according to claim 1,
wherein the support (51) defines a magnetometer plane (310) in a longitudinal (X) and transverse (Y) direction, or a longitudinal (X) and vertical (Z) extent of the peripheral coordinate system.

3. The peripheral (50) according to claim 2,
wherein the magnetometer plane (310) intersects a majority, or each, magnetometer (80) of the plurality of magnetometers (54), and/or wherein each magnetometer (80) of the plurality of magnetometers (54) is separated from any other magnetometer of the plurality of magnetometers (54) by a distance (S1-S5) in the magnetometer plane (310), wherein the distance is greater than 5mm, 6mm, 7mm, 8mm, 9mm, 10mm, 15mm, or 20mm.

4. The peripheral device (50) according to one of the preceding claims,
wherein the plurality of magnetometers (54) is disposed along at least one longitudinal axis of the support (51), more specifically wherein the plurality of magnetometers (54) is disposed along a single longitudinal axis (L1) of the support (51).

5. The peripheral device (50) according to one of claims 1 to 4,
wherein a first subset of the plurality of magnetometers (54) is disposed along a first longitudinal axis (L1) of the support (51), and a second subset of the plurality of magnetometers (54) is disposed along a second longitudinal axis (L2) of the support (51).

6. The peripheral device (50) according to claim 5,
wherein each magnetometer (80) comprised in the second subset of the plurality of magnetometers (54) is longitudinally offset by the same distance (S0, S0, S5) along the second longitudinal axis compared to a corresponding longitudinal offset distance along the first longitudinal axis of a corresponding magnetometer of the first subset of the plurality of magnetometers (54).

7. The peripheral device (50) according to claims 5 or 6,
wherein the first subset of the plurality of magnetometers (54) is disposed on a first face the support (51), and the second subset of the plurality of magnetometers (54) is disposed on a second face of the support (51).

8. The peripheral device (50) according to one of the preceding claims,
wherein the transverse extent of the support (51) is less than 30mm, more specifically less than 20 mm, and most specifically less than 10mm.

9. The peripheral device (50) according to one of the preceding claims,
wherein the longitudinal extent of the support (51) is less than 1000mm, 500mm, 400mm, 300mm, more specifically less than 250mm, 200mm, 175mm, 150mm, 125mm, 100mm, 75mm, or 50mm, and/or wherein the longitudinal extent of the peripheral device (50) is at least two times greater than the transverse extent of the peripheral device (50).

10. The peripheral device (50) according to one of the preceding claims, further comprising:
- an orientation sensor mounted on the first and/or the second face of the support (51);
wherein the orientation sensor is configured to detect that either the first or the second face of the support (51) is closer to a supporting surface of the peripheral device (50) and/or host device to which the peripheral device (50) is coupled.

11. The peripheral device (50) according to one of the preceding claims, further comprising:
- at least one further support defining a further coordinate system of the peripheral device (50), wherein the further support is displaceable relative to the support (51); and
- an articulated joint coupling the further support to the support (51).

12. The peripheral device (50) according to one of the preceding claims, further comprising:
- a displacement sensor configured to detect a spatial displacement between the support (51) and the at least one further support, in use.

13. A host device (10) comprising:
- a stowage portion (15) configured to store the peripheral device (50) according to one of claims 1 to 12, when the peripheral device (50) is not in use.

14. A system (1) comprising:
- a host device (10);
- a peripheral device (50) according to one of claims 1 to 12, wherein the peripheral device (50) is communicably coupled to the host device (50); and
- a user-borne device (100) comprising at least one magnetic object (110) and/or magnetic field generator;
wherein the peripheral device (50) is configured to obtain magnetic field measurements associated with the user-borne device (100), to determine a location of the user-borne device (100) relative to the peripheral coordinate system of the peripheral device (50), and to communicate the location of the user-borne device from the peripheral device (50) to the
host device (10).

15. A computer-implemented method (70) for determining a location of a user-borne device, comprising:
- obtaining (72), at a peripheral device (50) according to one of claims 1 to 12, magnetic field measurements associated with at least one magnetic object (110) of the user-borne device (100) and measured with a plurality of magnetometers (54) comprised within the peripheral device (50);
- determining (74), at either the host device (10), or the peripheral device (50), the location of the user-borne device (100) based on the magnetic field measurements;
- communicating (76) the location of the user-borne device (100) to a device driver instantiated in a user environment of the host device.
